# EUROPÄISCHE PATENTANMELDUNG

(11) **EP 3 048 702 A1**
(43) Veröffentlichungstag der Anmeldung: **27.07.2016**
(21) Anmeldenummer: 15151924.6
(22) Anmeldetag: 21.01.2015
(51) Int. Cl.: H02K 1/24, C21D 7/02, H02K 15/02, C21D 10/00

(54) **Rotor einer Reluktanzmaschine**

(71) Anmelder: Siemens Aktiengesellschaft, 80333 München (DE)
(72) Erfinder: Deim, Sybille, Dr., 90475 Nürnberg (DE); Scharrer, Martin, Dr., 91220 Schnaittach (DE); Vollmer, Rolf, 36129 Gersfeld (DE)

(57) **Zusammenfassung**

Die Erfindung betrifft einen Rotor (1) einer synchronen Reluktanzmaschine mit einer Anzahl von Polen, mit anisotroper magnetischer Leitfähigkeit, die jeweils u.a. durch eine Anordnung von magnetischen Führungsstegen (8) und magnetischen Flusssperren (9) gebildet ist, wobei mechanische Stützstege (5,7) vorgesehen sind, die zumindest zum Teil einer Kaltumformung unterzogen wurden.

## Beschreibung

Die Erfindung betrifft einen Rotor einer Reluktanzmaschine mit einer Anzahl von Polen mit anisotroper magnetischer Leitfähigkeit, die jeweils u.a. durch eine Anordnung von magnetischen Führungsstegen und magnetischen Flusssperren gebildet ist.

Reluktanzmaschinen weisen eine Rotorstruktur auf, die unterschiedliche magnetische Leitwerte in den magnetischen d- und q-Achsen aufweist. Dabei sind insbesondere in die Bleche des Rotors Schlitze gestanzt. Es verbleiben im einzelnen Blech des Rotors somit Flussleitstücke, die durch schmale Blechstege miteinander verbunden sind, um eine ausreichende Festigkeit unter Fliehkraftbeanspruchung des Rotors bei hoher Drehzahl zu gewährleisten. Eine Paketierung dieser Bleche bildet die oben beschriebene Rotorstruktur.

Die Blechstege werden breiter, wenn der Rotor für höhere Drehzahlen ausgelegt sein soll. Die Festigkeit dieser Blechstege begrenzt die maximale Drehzahl und somit auch die maximale Leistung der Reluktanzmaschine. Jedoch haben breitere Blechstege im Rotor auch höhere Streuflüsse zur Folge, die nicht zur Drehmomentbildung beitragen.

Ausgehend davon, liegt der Erfindung die Aufgabe zugrunde, einen Rotor für eine elektrische Reluktanzmaschine zu schaffen, der eine höhere Drehzahlfestigkeit und vergleichsweise geringere Streuflüsse aufweist. Gleichzeitig soll damit eine elektrische Reluktanzmaschine geschaffen werden, die u.a. für elektrische Fahrzeugantriebe geeignet ist, um dadurch den Wirkungsgrad dieser Antriebe zu steigern.

Die Lösung der gestellten Aufgabe gelingt durch einen Rotor einer synchronen Reluktanzmaschine mit einer Anzahl von Polen, mit anisotroper magnetischer Leitfähigkeit, die jeweils u.a. durch eine Anordnung von magnetischen Führungsstegen und magnetischen Flusssperren gebildet ist, wobei mechanische Stützstege vorgesehen sind, die zumindest zum Teil einer Kaltumformung unterzogen wurden.

Die Lösung der gestellten Aufgabe gelingt auch durch eine synchrone Reluktanzmaschine und die Anwendung einer synchronen Reluktanzmaschine bei elektrischen Fahrzeugen.

Außerdem gelingt die Lösung der gestellten Aufgabe durch ein Verfahren zur Herstellung eines Rotors einer synchronen Reluktanzmaschine mit einer Anzahl von Polen, mit anisotroper magnetischer Leitfähigkeit, die jeweils u.a. durch eine Anordnung von magnetischen Führungsstegen und magnetischen Flusssperren gebildet ist, wobei mechanische Stützstege vorgesehen sind, gekennzeichnet durch folgende Schritte:
- Stanzen einzelner Bleche aus einem Blechcoil,
- Kaltumformen zumindest einer vorgebbaren Anzahl von Stützstegen,
- Paketieren der einzelnen Bleche zu einem Blechpaket des Rotors.

Die jeweiligen Führungsstege und Stützstege eines Rotorblechs und/oder die sie umgeben Bereiche weisen aufgrund einer Versetzungshärtung, insbesondere einer Kaltumformung, eine vergleichsweise höhere Festigkeit auf, als das sie umgebende Blechmaterial. Dabei reduziert sich die magnetische Permeabilität, also die magnetische Leitfähigkeit, und die Polarisation der verfestigten Bereiche eines Rotorblechs, also insbesondere dieser Stege, was zu einer Reduktion des magnetischen Streuflusses des gesamten Rotors führt.

Damit erhöht sich die abgegebene Leistung an der Welle des Rotors bei hohen Drehzahlen aber auch das Drehmoment bei kleineren Drehzahlen der Reluktanzmaschine. Es können somit vergleichsweise kompaktere Reluktanzmaschinen gebaut werden, die insbesondere bei den Fahrzeugen mit elektrischen Antrieben, wie E-Car, E-Planes, Mining-Trucks und schienengebundenen Fahrzeuge einsetzbar sind.

Eine Kaltverfestigung kann beispielsweise durch eine plastische Verformung, z.B. Biegen, Stauchen oder Ziehen, der Führungs- und/oder Stützstege vorgenommen werden. Eine Kaltumformung kann auch durch eine gezielte Laserstrahl- oder Elektronenstrahlhärtung erreicht werden. Ebenso wird eine Kaltumformung auch durch Kugelstrahlen erreicht.

Bei Versuchen wurde dabei eine 30% höhere Festigkeit des Rotors aufgrund der Kaltverfestigung der Führungsstege und/oder Stützstege gegenüber einem herkömmlichen Rotor festgestellt.

Dies führt zu einer dementsprechenden Steigerung der Drehzahl des erfindungsgemäßen Rotors der Reluktanzmaschine.

Grundsätzlich sind alle Stützstege eines Blechs bzw. Rotors mit einer Versetzungshärtung versehen, jedoch können auch nur solche Stützstege oder Bereiche um die Stützstege mit einer Versetzungshärtung versehen sein, die einer besonderen mechanischen Belastung z.B. durch Fliehkräfte ausgesetzt sind.

Die Erfindung sowie weitere vorteilhafte Ausgestaltungen der Erfindung werden anhand folgender Ausführungsbeispiele näher erläutert. Dabei zeigen:
- FIG 1: eine elektrische Maschine,
- FIG 2: einen Querschnitt eines Rotors,
- FIG 3: Detailansicht eines Pols des Rotors,
- FIG 4: Detailansicht der radial äußeren Stützstege eines Rotorblechs,
- FIG 5: weitere Detailansicht der radial äußeren Stützstege eines Rotorblechs.

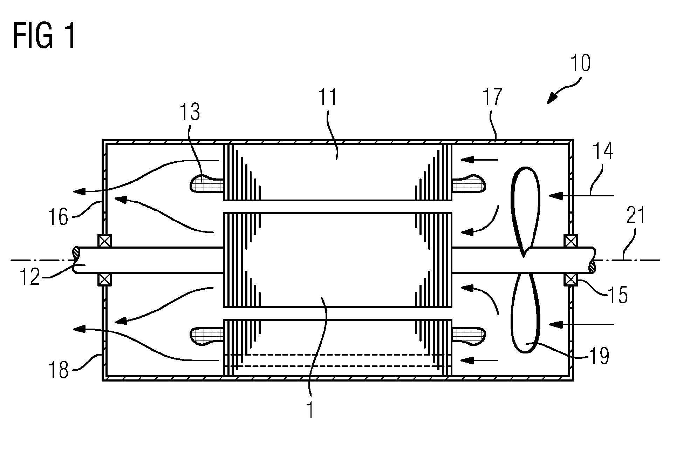

FIG 1 zeigt im Längsschnitt den prinzipiellen Aufbau einer synchronen Reluktanzmaschine 10, die einen Stator 11 aufweist, der in axialer Richtung geblecht ausgeführt ist und an seinen Stirnseiten jeweils Wickelköpfe eines Wicklungssystems 13 aufweist. Ein Rotor 1 ist mit einer Welle 12 drehfest verbunden, so dass durch elektromagnetische Wechselwirkung zwischen Stator 11 und Rotor 1 ein Drehmoment an der Welle 12 abgenommen werden kann.

Der Stator 11 ist in einem Gehäuse 17 positioniert und ist über ein Lagerschild 18 und den zugehörigen Lagern 15 auf der Welle 12 abgestützt. In diesem Ausführungsbeispiel sind an den Stirnseiten des Gehäuses 17 Öffnungen 16 vorgesehen, die durch einen Kühlluftstrom 14, durchströmt werden können. Der Kühlluftstrom 14 wird durch einen Lüfter 19, der als Fremdoder Eigenlüfter ausgebildet sein kann, angetrieben.

Insbesondere in den Blechpaketen von Rotor 1 und Stator 11 verlaufen im Wesentlichen axiale Kühlkanäle, die die Abwärme der Blechpakete und/oder Wicklungssystem beim Durchströmen des Kühlluftstromes 14 an diesen abgeben. Vorzugsweise fungieren dabei die Flusssperren 9 des Rotors 1 gleichzeitig neben ihrer Funktion als Flusssperre des magnetischen Flusses als axiale Kühlkanäle. Diese Flusssperren 9 sind also im Rahmen der Blechbearbeitung aus jedem Blech ausgestanzt worden.

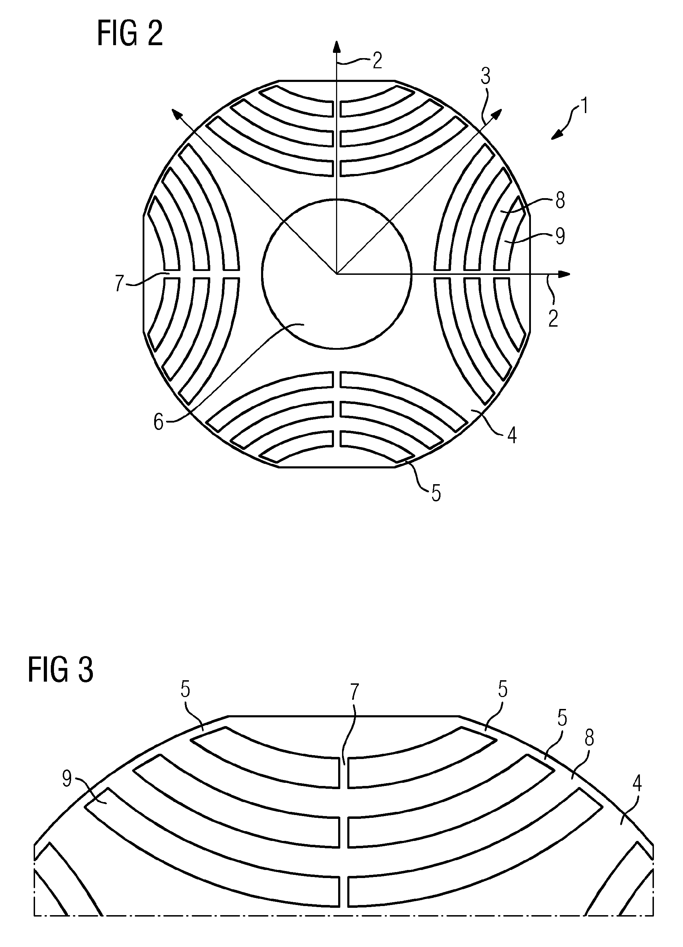

FIG 2 zeigt in einem Querschnitt eines Blechs des Rotors 1 mit seinen magnetischen d- und q-Achsen, wobei die q-Achse mit den Bezugszeichen 2 versehen ist und die d-Achse das Bezugszeichen 3 aufweist. Die Abplattung des Rotors 1 im Bereich der q-Achse 2 dient ebenfalls der Flussführung und/oder der Streuflussminderung.

Des Weiteren ist die Wellenbohrung 6 vorgesehen, wobei der Rotor 1 mit einer nicht näher dargestellten Welle 12 drehfest verbunden ist, um das Drehmoment auf eine Antriebsmaschine zu führen.

Der Rotor 1 ist in diesem ausgeprägten Fall als vierpoliger Rotor 1 ausgeführt, wobei durch die Ausstanzungen der einzelnen Bleche, welche Ausstanzungen als Flusssperren 9 fungieren, als auch durch die Führungsstege des magnetischen Flusses, die als Führungsstege 8 fungieren, diese Vierpoligkeit des Rotors 1 geschaffen wird. Gleichzeitig sind innerhalb der Flusssperren 9 in der Mitte Stützstege 7 vorgesehen, ebenso wie am Außenumfang Stützstege 5 vorgesehen sind, die bei hohen Drehzahlen das jeweilige Blech bzw. das Blechpaket des Rotors 1 zusammenhalten.

Durch einen Kaltumformprozess wird nunmehr der Bereich dieser Stützstege 5, 7 verfestigt, was zur geringeren Dimensionierung der Dicken dieser Stützstege 7 und 5 führt, was wiederum den Streufluss des Rotors 1 reduziert und die Leistungsfähigkeit der Reluktanzmaschine 10 erhöht.

Dabei werden entweder die Stützstege 5, 7 der Einzelbleche separat verfestigt und danach folgt eine Paketierung des Blechpakets des Rotors 1. Alternativ dazu erfolgt eine Verfestigung des gesamten Blechpakets, was aber dann eine Verfestigung der innerhalb des Blechs befindlichen Stützstege 7 erschwert. Eine Verfestigung der radial außen liegenden Stützstege 5 des bereits paketierten Blechpakets ist ebenfalls durchführbar.

Die Pole des Rotors 1 können bei der Bildung des Blechpakets geschrägt, gestaffelt oder achsparallel ausgeführt sein. Durch die Schrägung bzw. Staffelung der Bleche über die axiale Länge des Rotors 1 und damit der Pole, reduziert sich die Drehmomentenwelligkeit der Reluktanzmaschine 10, so dass der Einsatz derartiger Reluktanzmaschinen 10 besonders bei Werkzeugmaschinen und Fahrzeugen geeignet ist.

Der erfinderische Gedanke die Stützstege durch Kaltumformprozesse zu verfestigen, ist selbstverständlich auch bei höherpoligen Rotoren 1 also sechs-, acht-, zehn-, zwölfpoligen etc. anwendbar.

FIG 3 zeigt in einer näheren Darstellung die Ausbildung der Stützstege 5 und 7, die durch spezielle Verfahren kaltumgeformt werden.

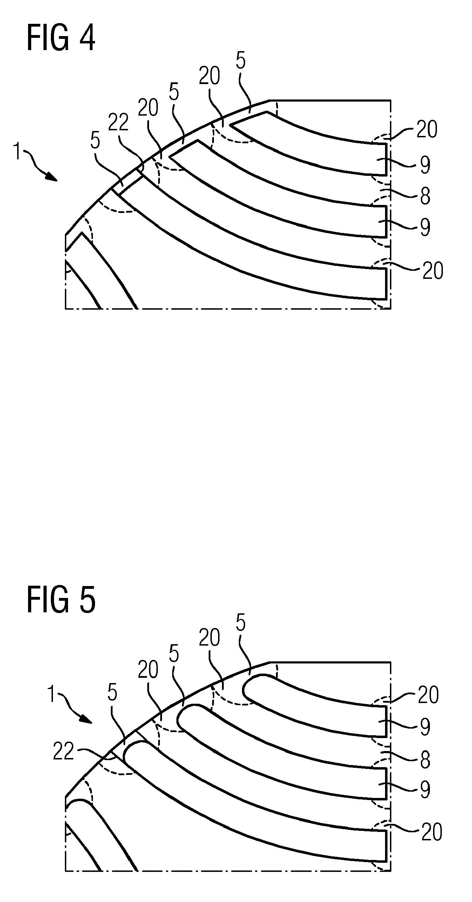

FIG 4 zeigt einen Ausschnitt eines Blechs zum Beispiel nach FIG 2, bei dem nicht nur allein die Stützstege 5, 7 selbst, sondern auch deren unmittelbaren Umgebungen, also die Bereiche 20 ebenfalls mittels Kaltumformen verfestigt wurden. Dies verhindert beispielsweise Kerbspannungen an den äußeren Rändern der Flusssperren 9.

FIG 5 zeigt ein anderes Blech des Rotors 1, wobei die radial äußeren Endabschnitte der Flusssperren 9 rundlich ausgeführt sind. Die Stützstege 5, 7 und/oder deren Bereiche 20 sind ebenfalls mittels Kaltumformen verfestigt worden.

Als mechanische Stützstege 5, 7 werden dabei insbesondere die Abschnitte des Blechs bezeichnet, die durch eine gedachte Verlängerung 22 der Kanten der Flusssperren 9, diese Stützstege 5, 7 bilden.

Grundsätzlich weist das Blechpaket des Rotors 1 Bleche mit identischem Blechschnitt auf. Dabei sind die Stützstege 5, 7 alle mittels Kaltumformen verfestigt worden. Es sind aber - je nach mechanischer Beanspruchung - auch nur eine vorgegebene Anzahl von Stützstegen 5, 7 mittels Kaltumformen verfestigt worden.

Alternativ dazu weist das Blechpaket des Rotors 1 mehrere unterschiedliche Blechschnitte auf, die zwar bzgl. ihres Durchmesser nahezu identisch sind, jedoch in der Positionierung der Stützstege 5, 7 innerhalb eines Blechs unterschiedlich zu anderen Blechen des vorliegenden Rotorblechpakets sind.

Eine derartige Anordnung von Rotoren 1 eignet sich insbesondere bei synchronen Reluktanzmaschinen 10 als Motor oder Generator in elektrischen Fahrzeugen, wie schienengebundenen Fahrzeugen (Lokomotiven, Triebzüge, Straßenbahnen ...), E-Cars, E-Planes und Mining-Trucks, da durch die erhöhte Energieeffizienz eines derartigen Antriebs die dementsprechenden Verluste und damit u.a. auch die Leistungsfähigkeit einer Batterie des jeweiligen Fahrzeugs geschont wird.

## Patentansprüche

1. Rotor (1) einer synchronen Reluktanzmaschine (10) mit einer Anzahl von Polen, mit anisotroper magnetischer Leitfähigkeit, die jeweils u.a. durch eine Anordnung von magnetischen Führungsstegen (8) und magnetischen Flusssperren (9) gebildet ist, wobei mechanische Stützstege (5,7) vorgesehen sind, die zumindest zum Teil einer Kaltumformung unterzogen wurden.

2. Rotor (1) nach Anspruch 1, **dadurch gekennzeichnet, dass** die Stützstege (5,7) am Außenumfang und/oder radial innen, insbesondere innerhalb der Flusssperren (9) angeordnet sind.

3. Synchrone Reluktanzmaschine mit einem Rotor (1) nach Anspruch 1 oder 2.

4. Elektrisches Fahrzeug mit zumindest einer synchronen Reluktanzmaschine nach Anspruch 3.

5. Verfahren zur Herstellung eines Rotors (1) einer synchronen Reluktanzmaschine mit einer Anzahl von Polen, mit anisotroper magnetischer Leitfähigkeit, die jeweils u.a. durch eine Anordnung von magnetischen Führungsstegen (8) und magnetischen Flusssperren (9) gebildet ist, wobei mechanische Stützstege (5,7) vorgesehen sind, **gekennzeichnet durch** folgende Schritte:
- Stanzen einzelner Bleche aus einem Blechcoil,
- Kaltumformen zumindest einer vorgebbaren Anzahl von Stützstegen (5,7),
- Paketieren der einzelnen Bleche zu einem Blechpaket des Rotors (1).

6. Verfahren nach Anspruch 5, **dadurch gekennzeichnet, dass** das Kaltumformen der Stützstege (5,7) durch Biegen oder gezielte Laserbehandlung oder Kugelstrahlen erfolgt.
